# EUROPÄISCHE PATENTSCHRIFT

(11) **EP 2 450 196 B1**
(45) Veröffentlichungstag und Bekanntmachung des Hinweises auf die Patenterteilung: **08.05.2019**
(21) Anmeldenummer: 11008846.5
(22) Anmeldetag: 07.11.2011
(51) Int. Cl.: B42D 25/355, B42D 25/369, B32B 29/00, D21H 27/32, B32B 27/36, B32B 27/10, D21H 21/40, D21H 21/42, B42D 25/43, B32B 3/10, B42D 25/373, B42D 25/455, B42D 25/47, B42D 25/346

(54) **VERFAHREN ZUR HERSTELLUNG EINES SICHERHEITSPAPIER**
METHOD FOR MANUFACTURING SAFETY PAPER
PROCÉDÉ DE FABRICATION D'UN PAPIER DE SÉCURITÉ

(30) Priorität: 09.11.2010 DE 102010050823
(43) Veröffentlichungstag der Anmeldung: 09.05.2012
(73) Patentinhaber: Giesecke+Devrient Currency Technology GmbH, 81677 München (DE)
(72) Erfinder: Schmitz, Christian, 83727 Schliersee-Neuhaus (DE); Bichlmeier, Stefan, 82008 Unterhaching (DE)

(56) Entgegenhaltungen:
- EP-A1- 1 359 792
- WO-A1-00/71361
- WO-A1-2012/022675
- GB-A- 2 464 496

## Beschreibung

Die Erfindung betrifft ein Verfahren zur Herstellung eines Sicherheitspapiers für Sicherheitsdokumente, nämlich Banknoten. Das Sicherheitspapier weist ein mehrschichtiges Sicherheitspapier-Substrat mit mindestens einer Papierschicht und mindestens einer Kunststoffschicht und ein zwischen die mindestens eine Papierschicht und die mindestens eine Kunststoffschicht eingebettetes Sicherheitselement auf. Das für den Schritt des Einbettens in das Sicherheitspapier vorgesehene Sicherheitselement hat einen Schichtaufbau mit einem transparenten oder transluzenten Träger, einer Funktionsschicht, einer Releaseschicht und einer ablösbaren, die Funktionsschicht schützenden Kunststoffträgerfolie in dieser Reihenfolge. Im Verfahren zur Herstellung des Sicherheitspapiers umfasst der Schritt des Einbettens des Sicherheitselements ein Ablösen der Kunststoffträgerfolie von dem einzubettenden Sicherheitselement als ersten Teilschritt und ein Aufbringen des so erhaltenen Sicherheitselements mittels der Releaseschicht auf die mindestens eine Kunststoffschicht des Sicherheitspapier-Substrats als zweiten Teilschritt, so dass das erhaltene Sicherheitspapier die mindestens eine Kunststoffschicht als Schutzschicht für die Funktionsschicht des eingebetteten Sicherheitselements aufweist.

Drucksubstrate für Sicherheitsdokumente sind einer ständigen Weiterentwicklung unterworfen, um den ebenfalls stetig wachsenden Bedürfnissen an Fälschungssicherheit entsprechen zu können. Von besonderem Interesse ist dabei, Sicherheiten zu schaffen, die im täglichen Gebrauch vom Benutzer ohne weitere technische Hilfsmittel zu erkennen sind, in ihrer Art und Weise aber nicht ohne Weiteres imitiert werden können. Ein solches Sicherheitsmerkmal ist z.B. ein Wasserzeichen oder ein Sicherheitsfaden.

Im Bestreben nach Sicherheitspapieren mit Reißfestigkeit und höherer Resistenz gegenüber Verschmutzung wurde z.B. in der WO 98/15418 vorgeschlagen, eine Banknote vollständig aus einem Kunststoffsubstrat zu fertigen. Allerdings haben die sogenannten Polymer-Banknoten mit Bezug auf die Fälschungssicherheit einige gewichtige Nachteile gegenüber Banknoten aus Papier zu verzeichnen. Insbesondere ist es nicht möglich, echte Wasserzeichen in diesen Substraten unterzubringen. Auch lassen sich andere, in Papiersubstraten etablierte Sicherheitsmerkmale wie Melierfasern, Planchetten oder Sicherheitsfäden in Polymer-Banknoten nicht realisieren.

Um die Vorteile von Papiersubstraten mit denen von Polymersubstraten zu kombinieren, sind im Stand der Technik Mehrschichtsubstrate, sogenannte hybride Substrate, vorgeschlagen worden. Die WO 2004/028825 beschreibt einen Schichtaufbau, bei dem eine Papierschicht beidseitig mit Folie, vorzugsweise vollflächig, abgedeckt ist. Aus der WO 2006/066431 ist ein Mehrschichtsubstrat bekannt, das wenigstens eine erste Papierlage, wenigstens eine zweite Papierlage, sowie wenigstens eine zwischen den Papierlagen angeordnete und mit den Papierlagen verbundene Kunststoffschicht aus wenigstens einem thermoplastischen polymeren Material umfasst. Verglichen mit den herkömmlichen Papiersubstraten weisen solche Mehrschichtsubstrate allerdings den Nachteil auf, dass das Einbetten von Sicherheitselementen, wie z.B. Sicherheitsfäden, zwischen die Papierlage und die Kunststoffschicht zu einer Aufwölbung des Drucksubstrats und zu einer Verschlechterung der Planlage führt, was mit einer erschwerten Verarbeitbarkeit im Druck einhergeht.

Dokument GB 2 464 496 A beschreibt ein Sicherheitsmerkmal, das auf einem Substrat gebildet ist. In diesem Dokument werden auch Methoden für das Einbetten von Sicherheitsvorrichtungen in Sicherheitssubstrate beschrieben.

Der Erfindung liegt daher die Aufgabe zugrunde, ein im Vergleich zum Stand der Technik verbessertes Verfahren zum Herstellen eines mehrschichtigen Sicherheitspapier bereitzustellen.

Diese Aufgabe wird durch das Verfahren zum Herstellen eines Sicherheitselements gemäß dem unabhängigen Anspruch gelöst. Weiterbildungen der Erfindung sind Gegenstand der Unteransprüche.

Ein Sicherheitselement für Sicherheitsdokumente, nämlich Banknoten, wird hergestellt, das einen Schichtaufbau mit einem transparenten oder transluzenten Träger (z.B. eine transparente oder transluzente Kunststofffolie), einer Funktionsschicht, einer Releaseschicht und einer ablösbaren, die Funktionsschicht schützenden Kunststoffträgerfolie in dieser Reihenfolge aufweist.

Die Funktionsschicht kann bevorzugt a) aus einer einzelnen Schicht gebildet sein, die vollflächig vorliegt oder Aussparungen aufweist, oder b) aus unterschiedlichen, übereinander angeordneten Teilschichten gebildet sein, die b1) jeweils vollflächig vorliegen oder b2) jeweils deckungsgleiche oder im Wesentlichen deckungsgleiche Aussparungen aufweisen.

Die Funktionsschicht kann insbesondere aus unterschiedlichen, übereinander angeordneten Teilschichten gebildet sein, die jeweils vollflächig vorliegen, wobei zumindest eine Teilschicht lumineszierende Eigenschaften aufweist.

Die Funktionsschicht kann insbesondere eine einzelne, metallische Schicht mit Aussparungen sein.

Die Funktionsschicht kann insbesondere aus zwei unterschiedlichen, übereinander angeordneten Teilschichten gebildet sein, nämlich einer metallischen Schicht und einer zwischen dem transparenten oder transluzenten Träger und der metallischen Schicht angeordneten Schicht mit lumineszierenden und/oder maschinenlesbaren Eigenschaften, wobei die zwei Teilschichten jeweils deckungsgleiche oder im Wesentlichen deckungsgleiche Aussparungen aufweisen. Die zwischen dem transparenten oder transluzenten Träger und der metallischen Schicht angeordnete Schicht mit maschinenlesbaren Eigenschaften enthält vorzugsweise magnetische und/oder elektrisch leitfähige Merkmalsstoffe.

Weiterhin wird bevorzugt, dass das Sicherheitselement oberhalb der der Funktionsschicht gegenüber liegenden Seite des transparenten oder transluzenten Trägers eine opake Deckschicht, insbesondere eine Deckweißschicht, und gegebenenfalls eine Klebeschicht zum Verbessern der Haftung auf der mindestens einen Papierschicht in dieser Reihenfolge aufweist.

Das Sicherheitselement bildet einen Sicherheitsfaden.

Die Erfindung betrifft ein Verfahren zur Herstellung eines Sicherheitspapiers für Sicherheitsdokumente, nämlich Banknoten, das ein mehrschichtiges Sicherheitspapier-Substrat mit mindestens einer Papierschicht und mindestens einer Kunststoffschicht aufweist, umfassend den Schritt des Einbettens eines Sicherheitselements zwischen die mindestens eine Papierschicht und die mindestens eine Kunststoffschicht, wobei das Sicherheitselement einen Sicherheitsfaden bildet, wobei
das einzubettende Sicherheitselement einen Schichtaufbau mit einem transparenten oder transluzenten Träger, einer Funktionsschicht, einer Releaseschicht und einer ablösbaren, die Funktionsschicht schützenden Kunststoffträgerfolie in dieser Reihenfolge aufweist und die Haftung der Releaseschicht zur Kunststoffträgerfolie geringer als zur Funktionsschicht ist, und
der Schritt des Einbettens des Sicherheitselements ein Ablösen der Kunststoffträgerfolie von dem einzubettenden Sicherheitselement als ersten Teilschritt und ein Aufbringen des so erhaltenen Sicherheitselements mittels der Releaseschicht auf die mindestens eine Kunststoffschicht des Sicherheitspapier-Substrats als zweiten Teilschritt umfasst, so dass das erhaltene Sicherheitspapier die mindestens eine Kunststoffschicht als Schutzschicht für die Funktionsschicht des eingebetteten Sicherheitselements aufweist.

Es wird bevorzugt, dass der Schritt des Einbettens, der ein Aufbringen des von der Kunststoffträgerfolie befreiten Sicherheitselements mittels der Releaseschicht auf die mindestens eine Kunststoffschicht des Sicherheitspapier-Substrats als zweiten Teilschritt umfasst, insbesondere mittels einer Klebeschicht, z.B. einer Heißsiegellack-Schicht, erfolgt. Es wird also bevorzugt, dass die Releaseschicht nach dem ersten Teilschritt und vor dem zweiten Teilschritt mit einer Heißsiegellack-Schicht versehen wird.

Nach dem Verfahren gemäß der Erfindung wird ein Sicherheitspapier für Sicherheitsdokumente, nämlich Banknoten, erhalten.

Der Erfindung liegt die Erkenntnis zugrunde, dass eine signifikante Dickenreduktion und ein geringeres Aufwellen bzw. Aufwölben bei Sicherheitspapieren dadurch erreicht werden kann, indem die für Sicherheitselemente übliche Trägerfolie vor der Einbringung des Sicherheitselements entfernt wird. Die Schutzwirkung dieser Trägerfolie wird von einer Kunststoffschicht des mehrschichtigen Sicherheitspapier-Substrats, in das das Sicherheitselement eingebracht wird, übernommen. Darüber hinaus zeichnet sich das erfindungsgemäße Verfahren dadurch aus, dass Standardheißsiegelkleber für die Einbringung des Sicherheitselements verwendet werden können. Der Schichtaufbau des in das Sicherheitspapier eingebrachten Sicherheitselements beinhaltet eine Funktionsschicht mit beständigkeitsgefährdeten Bereichen, wie z.B. Magnetbereiche und/oder metallische Beschichtungen, die zwischen zwei Polymerschichten angeordnet sind, so dass mit klassischen Sicherheitselementen vergleichbare Beständigkeiten erzielt werden können. Die Dickenreduktion bei dem durch das Verfahren gemäß der Erfindung erhaltenen Sicherheitspapier ermöglicht eine bessere Verarbeitbarkeit beim Druck.

Die Erfindung wird nachfolgend anhand von bevorzugten Ausführungsformen beschrieben.

Mehrschichtige Sicherheitselemente sind im Stand der Technik bekannt, siehe z.B. die Druckschriften EP 2123 471 A1, DE 10 2008 061 608 A1, DE 10 2008 031 325 A1 und DE 10 2004 031 043 A1.

Die Funktionsschicht des Sicherheitselements kann z.B. von einer metallischen Schicht (wie z.B. eine reflektierende metallische Schicht), einer beugungsoptisch wirksamen Schicht, einer optisch variablen Schicht, einer Interferenzschicht, einer Druckfarbenschicht, einer lumineszierenden Schicht, die z.B. lumineszierende Merkmalsstoffe enthält, und einer Schicht mit maschinenlesbaren Eigenschaften, die z.B. magnetische und/oder elektrisch leitfähige Merkmalsstoffe enthält, gewählt sein. Des Weiteren kann die Funktionsschicht eine einzelne Schicht sein oder in Form von mehreren unterschiedlichen, übereinander angeordneten Teilschichten vorliegen, die jeweils unabhängig voneinander von z.B. einer metallischen Schicht (wie z.B. eine reflektierende metallische Schicht), einer beugungsoptisch wirksamen Schicht, einer optisch variablen Schicht, einer Interferenzschicht, einer Druckfarbenschicht, einer lumineszierenden Schicht, die z.B. lumineszierende Merkmalsstoffe enthält, und einer Schicht mit maschinenlesbaren Eigenschaften, die z.B. magnetische und/oder elektrisch leitfähige Merkmalsstoffe enthält, gewählt sind. Die Funktionsschicht, die gegebenenfalls durch mehrere Teilschichten gebildet ist, kann vollflächig oder teilflächig, d.h. Aussparungen aufweisend, vorliegen. Durch das Einbringen von Aussparungen in die Funktionsschicht können Motive, wie etwa ein Schriftzug, eine Ziffernfolge oder ein Muster, dargestellt werden, die nach Einbringen des Sicherheitselements in das Sicherheitspapier von einer Seite oder von beiden Seiten des Sicherheitsdokuments erkennbar sind.

Das Sicherheitselement kann z.B. den folgenden Schichtaufbau a) bis h) in dieser Reihenfolge aufweisen:
a) Kunststoffträgerfolie;
b) Releaseschicht;
c) metallische Schicht mit Aussparungen;
d) lumineszierende Schicht oder maschinenlesbare Schicht mit magnetischen und/oder elektrisch leitfähigen Merkmalsstoffen, wobei die Schicht Aussparungen aufweist, die deckungsgleich oder im Wesentlichen deckungsgleich zu den Aussparungen der metallischen Schicht sind;
e) Kaschierlack;
f) transparenter oder transluzenter Träger, z.B. eine transparente oder transluzente Kunststofffolie;
g) opake Deckschicht, z.B. eine Deckweißschicht;
h) Klebeschicht, z.B. Heißsiegellack-Schicht, zum Verbessern der Haftung des Sicherheitselements auf der Papierschicht des mehrschichtigen Sicherheitspapier-Substrats.

Als Releaseschicht kann z.B. eine UV-härtende Lackschicht auf die Kunststoffträgerfolie aufgebracht, insbesondere aufgedruckt werden. Zweckmäßigerweise enthält die UV-härtende Lackschicht Photoinitiatoren. Die Haftung der Releaseschicht zur abzulösenden Kunststoffträgerfolie und zur metallischen Schicht kann durch die Wahl des Lacks und der ggf. vorhandenen Photoinitiatoren und durch das Ausmaß der UV-Härtung eingestellt werden. Die metallische Schicht kann z.B. von den Elementen Al, Cu, Au, Fe, Cr, Ni, Ag, Pt, Pd und Ti gewählt sein oder aus einer Legierung zweier oder mehrerer dieser Elemente bestehen. Das Einbringen von Aussparungen in die metallische Schicht kann z.B. mittels Ätztechnik oder durch ein Waschverfahren, umfassend ein Aufdrucken einer ersten, wasserlöslichen Druckfarbe auf die Releaseschicht, Aufbringen einer Metallschicht (z.B. durch Aufdampfen) auf die erste Druckfarbe, bereichsweise Aufdrucken einer zweiten, wasserfesten Druckfarbe auf die Metallschicht, gefolgt von einem Waschschritt mit Wasser, erfolgen. Bezüglich der Einzelheiten zum Waschverfahren wird auf die Druckschriften WO 99/13157 und DE 10 2007 055112 A1 sowie den darin zitierten Stand der Technik verwiesen.

Das Aufbringen der lumineszierenden Schicht oder der maschinenlesbaren Schicht mit magnetischen und/ oder elektrisch leitfähigen Merkmalsstoffen auf die metallische Schicht kann z.B. drucktechnisch erfolgen.

Die Kunststoffträgerfolie kann im Schritt des Einbettens zwischen die Papierschicht und die Kunststoffschicht des mehrschichtigen Sicherheitspapier-Substrats bevorzugt durch Trennwicklung abgelöst werden.

Das Sicherheitspapier, in das das Sicherheitselement eingebettet werden kann, weist ein mehrschichtiges Sicherheitspapier-Substrat mit mindestens einer Papierschicht und mindestens einer Kunststoffschicht auf. Bei dem mehrschichtigen Sicherheitspapier-Substrat kann es sich insbesondere um einen in der WO 2004/028825 beschriebenen Schichtaufbau handeln, bei dem eine Papierschicht beidseitig mit Folie, vorzugsweise vollflächig, abgedeckt ist. Der Faden kann z.B. während der Herstellung eines solchen Verbund-Substrats mittels der vorstehend erwähnten Klebschicht h) auf der Papierschicht fixiert werden und nachfolgend die Folie durch Kaschieren auf die Papierschicht aufgebracht werden. Die Folie wird auf die Papierschicht vorzugsweise kaltkaschiert. Hierbei wird ein Kleber auf die Folie aufgebracht, angetrocknet und gegebenenfalls durch Temperaturen von vorzugsweise maximal 70°C bis 110°C aktiviert. Die Folie wird insbesondere nicht angeschmolzen oder durch Hitze übermäßig belastet. Dies hat den Vorteil, dass eventuell vorhandene Reckungen der Folien nicht zerstört werden, sondern auch nach dem Kaschieren noch vorhanden sind. Bezüglich der Einzelheiten zum Aufbringen von Folie auf Papier bei einem hybriden Folie/Papier/Folie-Substrat wird des Weiteren auf die Druckschrift WO 2004/ 028825 verwiesen.

Der Faden kann nach dem Ablösen der Kunststoffträgerfolie (z.B. mittels Trennwicklung) einem Heißsiegellackieren der Releaseschicht unterzogen werden. Der auf diese Weise behandelte Faden wird dann zwischen den Einzellagen des mehrschichtigen Sicherheitspapier-Substrats eingearbeitet.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:
- Fig. 1: eine schematische Darstellung eines Sicherheitselements;
- Fig. 2: eine schematische Darstellung eines Sicherheitspapiers mit einem darin eingebetteten Sicherheitselement ;

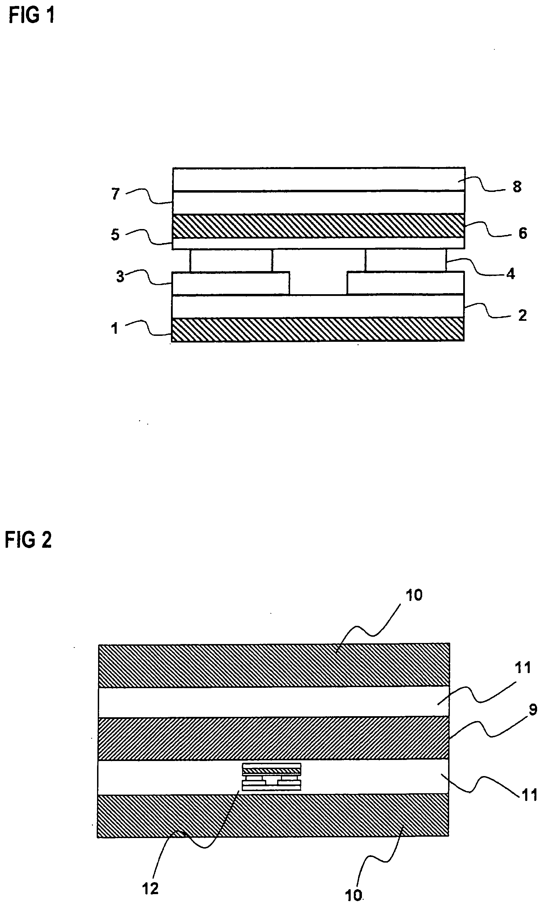

In Fig. 1 ist ein Ausführungsbeispiel für das Sicherheitselement in Form eines Sicherheitsfadens gezeigt. Der Sicherheitsfaden hat einen Schichtaufbau mit:
einer 19 µm dicken PET-Folie (PET = Polyethylenterephthalat) als Kunststoffträgerfolie 1;
einer Releaseschicht 2;
einer Al-Schicht 3 mit Aussparungen;
einer drucktechnisch erzeugten magnetischen Schicht 4;
einem Kaschierlack 5;
einer 12 µm dicken PET-Folie 6 als transparenten oder transluzenten Träger;
einer Deckweißschicht 7; und
einer Heißsiegellack-Schicht 8.

Gemäß dem erfindungsgemäßen Verfahren wird die Kunststoffträgerfolie 1 vor dem Einbringen des Sicherheitsfadens von der Releaseschicht 2 z.B. durch Trennwicklung abgelöst.

In Fig. 2 ist ein gemäß dem erfindungsgemäßen Verfahren erhaltenes Sicherheitspapier gezeigt. Das Sicherheitspapier weist im vorliegenden Beispiel ein mehrschichtiges Sicherheitspapier-Substrat mit einer beidseitig mit Folie 10 vollflächig abgedeckten Papierschicht 9 auf. Die beiden Folien 10 sind mittels Kaschierschichten 11 auf der Papierschicht 9 aufgebracht. Das Sicherheitselement gemäß Fig. 1 ist so zwischen die untere Folie 10 und die Papierschicht 9 eingebettet, dass die untere Folie 10 als Schutzschicht für die Funktionsschicht, d.h. die Al-Schicht 3 und die magnetische Schicht 4, des Sicherheitselements wirkt.

## Patentansprüche

1. Verfahren zur Herstellung eines Sicherheitspapiers für Sicherheitsdokumente, nämlich Banknoten, das ein mehrschichtiges Sicherheitspapier-Substrat mit mindestens einer Papierschicht (9) und mindestens einer Kunststoffschicht (10) aufweist, umfassend den Schritt des Einbettens eines Sicherheitselements (12) zwischen die mindestens eine Papierschicht (9) und die mindestens eine Kunststoffschicht (10), wobei das Sicherheitselement einen Sicherheitsfaden bildet, wobei
das einzubettende Sicherheitselement (12) einen Schichtaufbau mit einem transparenten oder transluzenten Träger (6), einer Funktionsschicht (4), einer Releaseschicht (2) und einer ablösbaren, die Funktionsschicht schützenden Kunststoffträgerfolie (1) in dieser Reihenfolge aufweist und die Haftung der Releaseschicht zur Kunststoffträgerfolie geringer als zur Funktionsschicht ist, und **dadurch gekennzeichnet, dass**
der Schritt des Einbettens des Sicherheitselements (12) ein Ablösen der Kunststoffträgerfolie (1) von dem einzubettenden Sicherheitselement als ersten Teilschritt und ein Aufbringen des so erhaltenen Sicherheitselements mittels der Releaseschicht (2) auf die mindestens eine Kunststoffschicht (10) des Sicherheitspapier-Substrats als zweiten Teilschritt umfasst, so dass das erhaltene Sicherheitspapier die mindestens eine Kunststoffschicht (10) als Schutzschicht für die Funktionsschicht (4) des eingebetteten Sicherheitselements (12) aufweist.

2. Verfahren nach Anspruch 1, wobei die Releaseschicht nach dem ersten Teilschritt und vor dem zweiten Teilschritt mit einer Heißsiegellack-Schicht versehen wird.

3. Verfahren nach Anspruch 1 oder 2, wobei die Funktionsschicht des einzubettenden Sicherheitselements a) aus einer einzelnen Schicht gebildet ist, die vollflächig vorliegt oder Aussparungen aufweist, oder b) aus unterschiedlichen, übereinander angeordneten Teilschichten gebildet ist, die b1) jeweils vollflächig vorliegen oder b2) jeweils deckungsgleiche oder im Wesentlichen deckungsgleiche Aussparungen aufweisen.

4. Verfahren nach Anspruch 3, wobei die Funktionsschicht des einzubettenden Sicherheitselements aus unterschiedlichen, übereinander angeordneten Teilschichten gebildet ist, die jeweils vollflächig vorliegen und zumindest eine Teilschicht lumineszierende Eigenschaften aufweist.

5. Verfahren nach Anspruch 3, wobei die Funktionsschicht des einzubettenden Sicherheitselements eine metallische Schicht mit Aussparungen ist.

6. Verfahren nach Anspruch 3, wobei die Funktionsschicht des einzubettenden Sicherheitselements aus zwei unterschiedlichen, übereinander angeordneten Teilschichten gebildet ist, nämlich einer metallischen Schicht und einer zwischen dem transparenten oder transluzenten Träger und der metallischen Schicht angeordneten Schicht mit lumineszierenden und/oder maschinenlesbaren Eigenschaften, und die zwei Teilschichten jeweils deckungsgleiche oder im Wesentlichen deckungsgleiche Aussparungen aufweisen.

7. Verfahren nach Anspruch 6, wobei die zwischen dem transparenten oder transluzenten Träger und der metallischen Schicht angeordnete Schicht maschinenlesbare Eigenschaften aufweist und magnetische und/oder elektrisch leitfähige Merkmalsstoffe enthält.

8. Verfahren nach einem der vorangehenden Ansprüche, wobei das einzubettende Sicherheitselement oberhalb der der Funktionsschicht gegenüber liegenden Seite des transparenten oder transluzenten Trägers eine opake Deckschicht, insbesondere eine Deckweißschicht, und gegebenenfalls eine Klebeschicht zum Verbessern der Haftung auf der mindestens einen Papierschicht in dieser Reihenfolge aufweist.

## Claims

1. A method for manufacturing a security paper for security documents, namely banknotes, having a multilayer security paper substrate with at least one paper layer (9) and at least one plastic layer (10), comprising the step of embedding a security element (12) between the at least one paper layer (9) and the at least one plastic layer (10), wherein the security element forms a security thread, wherein the security element (12) to be embedded has, in this sequence, a layer structure with a transparent or translucent carrier (6), a functional layer (4), a release layer (2) and a detachable plastic carrier foil (1) protecting the functional layer, and the adhesion of the release layer to the plastic carrier foil is lower than that to the functional layer, and **characterized in that**
the step of embedding the security element (12) comprises a detachment of the plastic carrier foil (1) from the security element to be embedded as the first substep, and an application of the thus obtained security element by means of the release layer (2) onto the at least one plastic layer (10) of the security paper substrate as the second substep, so that the obtained security paper has the at least one plastic layer (10) as a protective layer for the functional layer (4) of the embedded security element (12).

2. The method according to claim 1, wherein the release layer is supplied with a heat-seal lacquer layer after the first substep and before the second substep.

3. The method according to claim 1 or 2, wherein the functional layer of the security element to be embedded a) is formed of one single layer that is present over the full area or has recesses, or b) is formed of different partial layers arranged above one another, which b1) are present over the full area in each case or b2) have congruent or substantially congruent recesses in each case.

4. The method according to claim 3, wherein the functional layer of the security element to be embedded is formed of different partial layers arranged above one another, which are present over the full area in each case, and at least one partial layer has luminescent properties.

5. The method according to claim 3, wherein the functional layer of the security element to be embedded is a metallic layer with recesses.

6. The method according to claim 3, wherein the functional layer of the security element to be embedded is formed of two different partial layers arranged above one another, namely a metallic layer and a layer with luminescent and/or machine-readable properties arranged between the transparent or translucent carrier and the metallic layer, and the two partial layers have congruent or substantially congruent recesses in each case.

7. The method according to claim 6, wherein the layer arranged between the transparent or translucent carrier and the metallic layer has machine-readable properties and contains magnetic and/or electroconductive feature substances.

8. The method according to any of the preceding claims, wherein, above the side of the transparent or translucent carrier disposed opposite the functional layer, the security element to be embedded has, in this sequence, an opaque cover layer, in particular an opaque white layer, and possibly an adhesive layer for improving adhesion on the at least one paper layer.

## Revendications

1. Procédé de fabrication d'un papier de sécurité pour documents de sécurité, à savoir pour billets de banque, lequel comporte un substrat multicouche pour papier de sécurité ayant au moins une couche de papier (9) et au moins une couche de matière plastique (10), comprenant l'étape de l'encastrement d'un élément de sécurité (12) entre la au moins une couche de papier (9) et la au moins une couche de matière plastique (10),
cependant que l'élément constitue un fil de sécurité, cependant que
l'élément de sécurité (12) à encastrer comporte une structure en couches ayant, dans cet ordre, un support (6) transparent ou translucide, une couche fonctionnelle (4), une couche de décollement (2) et un film support en matière plastique (1) détachable protégeant la couche fonctionnelle, et que l'adhérence de la couche de décollement au film support en matière plastique est plus faible qu'à la couche fonctionnelle, et **caractérisé en ce que**
l'étape de l'encastrement de l'élément de sécurité (12) comprend, en tant que première étape partielle, un détachement du film support en matière plastique (1) de l'élément de sécurité à encastrer, et, en tant que deuxième étape partielle, une application, au moyen de la couche de décollement (2), de l'élément de sécurité ainsi obtenu sur la au moins une couche de matière plastique (10) du substrat pour papier de sécurité, de telle sorte que le papier de sécurité ainsi obtenu comporte la au moins une couche de matière plastique (10) comme couche de protection pour la couche fonctionnelle (4) de l'élément de sécurité (12) encastré.

2. Procédé selon la revendication 1, cependant que la couche de décollement est, après la première étape partielle et avant la deuxième étape partielle, pourvue d'une couche de vernis thermoscellable.

3. Procédé selon la revendication 1 ou 2, cependant que la couche fonctionnelle de l'élément de sécurité à encastrer est constituée a) d'une seule couche qui est à pleine surface ou qui comporte des évidements, ou bien b) de couches partielles superposées différentes qui b1) sont respectivement à pleine surface ou b2) qui comportent des évidements respectivement coïncidant entre eux ou essentiellement coïncidant entre eux.

4. Procédé selon la revendication 3, cependant que la couche fonctionnelle de l'élément de sécurité à encastrer est constituée de différentes couches partielles superposées qui sont respectivement à pleine surface, et comporte au moins une couche partielle présentant des

5. Procédé selon la revendication 3, cependant que la couche fonctionnelle de l'élément de sécurité à encastrer est une couche métallique ayant des évidements.

6. Procédé selon la revendication 3, cependant que la couche fonctionnelle de l'élément de sécurité à encastrer est constituée de deux couches partielles superposées différentes, à savoir d'une couche métallique et d'une couche qui est agencée entre le support transparent ou translucide et la couche métallique et qui a des propriétés luminescentes et/ou lisibles par machine, et que les deux couches partielles comportent des évidements respectivement coïncidant entre eux ou essentiellement coïncidant entre eux.

7. Procédé selon la revendication 6, cependant que la couche agencée entre le support transparent ou translucide et la couche métallique présente des propriétés lisibles par machine et contient des substances caractéristiques magnétiques et/ou électroconductrices.

8. Procédé selon une des revendications précédentes, cependant que l'élément de sécurité à encastrer comporte, au-dessus de la face du support transparent ou translucide opposée à la couche fonctionnelle, dans cet ordre, une couche opaque de recouvrement, en particulier une couche de blanc couvrant, et éventuellement une couche de colle pour améliorer l'adhérence sur la au moins une couche de papier.
